# EUROPÄISCHE PATENTSCHRIFT

(11) **EP 3 786 663 B1**
(45) Veröffentlichungstag und Bekanntmachung des Hinweises auf die Patenterteilung: **28.08.2024**
(21) Anmeldenummer: 20177073.2
(22) Anmeldetag: 28.05.2020
(51) Int. Cl.: G01S 7/481, G01S 7/487, G01S 7/493, G01S 17/42, G01S 17/88, A01D 41/127, G01S 7/497, G01S 7/52, G01S 7/40

(54) **VERFAHREN ZUR SIGNALAUSWERTUNG VON SIGNALEN EINES ENTFERNUNGSMESSERS**
METHOD FOR SIGNAL EVALUATION OF SIGNALS FROM A RANGEFINDER
PROCÉDÉ D'ÉVALUATION DES SIGNAUX D'UN TÉLÉMÈTRE

(30) Priorität: 29.08.2019 DE 102019123208
(43) Veröffentlichungstag der Anmeldung: 03.03.2021
(73) Patentinhaber: CLAAS Selbstfahrende Erntemaschinen GmbH, 33428 Harsewinkel (DE)
(72) Erfinder: Belau, Sven Carsten, 33332 Gütersloh (DE); Middelberg, René, 49080 Osnabrück (DE); Irmer, Daniel, 33442 Herzebock-Clarholz (DE); Spiekermann, Sebastian, 48346 Ostbevern (DE)
(74) Vertreter: CLAAS Gruppe

(56) Entgegenhaltungen:
- EP-A1- 3 300 561
- EP-A1- 3 474 034
- EP-A2- 1 302 784
- DE-A1- 4 411 713
- DE-U1- 202012 105 044
- US-A1- 2018 284 268
- US-B1- 6 611 227

## Beschreibung

Die vorliegende Erfindung betrifft ein Verfahren zur Signalauswertung von Signalen eines Entfernungsmessers.

Der Entfernungsmesser ist bevorzugt ein Laserentfernungsmesser. Laserentfernungsmesser sind auch als LIDAR-Systeme bekannt. Laserentfernungsmesser messen die Entfernung von Messpunkten zu einem Sensorpunkt des Laserentfernungsmessers. Laserentfernungsmesser, die einen zweidimensionalen oder dreidimensionalen Raum abtasten werden auch als Laserscanner bezeichnet. Die EP3474034A1 beschreibt ein Abstandsmessgerät und die DE4411713A1 eine optische Entfernungsmessvorrichtung. Aus der EP3300561A1 ist eine selbstfahrende Erntemaschine mit einem Laserscanner bekannt. Der Laserscanner dient dazu eine Fahrgasse für die selbstfahrende Erntemaschine zu erkennen.

Aufgabe der Erfindung ist es die Signalauswertung von Signalen eines Entfernungsmessers zu verbessern.

Erfindunsemäß dienen dazu ein Verfahren gemäß Anspruch 1 und eine selbstfahrende landwirtschaftliche Arbeitsmaschine gemäß Anspruch 17.

Die Trennung der Messpunkte in Nutzsignale und Störsignale über die Entfernung ist eine besonders einfache Form der Trennung. Die Trennung über die Entfernung ist besonders nützlich, wenn die Entfernung der zu vermessenden Objekte annähernd bekannt ist. Ein Beispiel ist eine selbstfahrende Landmaschine, wie eine Mähdrescher, ein Feldhäcksler oder ein Traktor, die einen Entfernungsmesser einsetzt um Objekte in Fahrtrichtung zu erkennen. Ist der Entfernungsmesser oben an der Landmaschine angebracht und misst nach vorne unten, so ist davon auszugehen, dass auf den ersten Metern kein Objekt ist, das vermessen werden soll. Die Nutzsignale können einer Anwendung zur weiteren Verarbeitung zugeleitet werden. Dass Warnsignal kann den Nutzer oder die Anwendung darauf hinweisen, dass die Signalqualität beeinträchtigt ist. Darauf kann der Nutzer oder die Anwendung reagieren und ggf. Maßnahmen zur Verbesserung der Signalqualität einleiten. Die Störsignale können bei Bedarf genutzt werden, um geeignete Maßnahmen zur Verbesserung der Signalqualität auszuwählen.

Bevorzugt ist der Entfernungsmesser auf einer selbstfahrenden landwirtschaftlichen Arbeitsmaschine befestigt. Bei der Arbeit einer selbstfahrenden landwirtschaftlichen Arbeitsmaschine auf einem Feld entstehen häufig Staub und Schmutz, welche die Signalqualität des Entfernungsmessers beeinträchtigen. Daher ist der Einsatz eines erfindungsgemäßen Verfahrens hier besonders vorteilhaft.

Der erste Grenzwert ist vorzugsweise kleiner als sechs Meter. Bei der Anbringung des Entfernungsmessers am Dach einer selbstfahrenden landwirtschaftlichen Arbeitsmaschine sind oberhalb von sechs Metern zu vermessende Objekte zu erwarten.

Weiterhin ist der erste Grenzwert vorzugsweise größer als drei Meter. Bei der Anbringung des Entfernungsmessers an einer selbstfahrenden landwirtschaftlichen Arbeitsmaschine sind unterhalb von drei Metern keine zu vermessenden Objekte zu erwarten.

Vorzugsweise werden Störsignale in Staubsignale und Schmutzsignale unterschieden, wobei Störsignale mit einer Entfernung unterhalb eines zweiten Grenzwertes als Schmutzsignale und Störsignale oberhalb des zweiten Grenzwertes als Staubsignale identifiziert werden. Die Unterscheidung in Staubsignale und Schmutzsignale über die Entfernung ermöglicht eine Unterscheidung der Ursache der Störsignale. Entfernungsmesser sind typischerweise zum Schutz hinter einer Abdeckung verbaut. Die Abdeckung schützt den Entfernungsmesser vor Beschädigungen. Im Falle eines Laserentfernungsmessers ist die Abdeckung typischerweise eine transparente Scheibe. Entfernungsmesser arbeiten durch Aussendung von Messsignalen und Empfang der reflektierten Messsignale. Aus der Laufzeit der Messsignale wird die Entfernung bestimmt. Schmutzsignale entstehen durch Reflektion der Messsignale an Schmutz, der sich auf der Abdeckung angelagert hat. Staubsignale entstehen durch Reflektion der Messsignale an Staubteilchen, die sich zwischen Abdeckung und zu vermessendem Objekt befinden.

Der zweite Grenzwert ist vorzugsweise größer als die Entfernung zwischen Sensorpunkt und Abdeckung, da das Messsignal nach der Reflektion am Schmutz mehrfach reflektiert werden kann bevor es vom Sensor absorbiert wird. Der zweite Grenzwert ist vorzugsweise größer als dreißig Zentimeter.

Der zweite Grenzwert ist vorzugsweise kleiner als einen Meter. Oberhalb von einem Meter ist davon auszugehen, dass die Signale nicht von einer Reflektion an Schmutz entstanden sind.

Vorzugsweise bleiben Nutzsignale oberhalb eines dritten Grenzwertes bei der Bestimmung der Anzahl der Nutzsignale unbeachtet. Messpunkte mit sehr großen Entfernungen werden typischerweise nicht von den zu vermessenden Objekten direkt reflektiert, sondern entstehen durch Mehrfachreflektion oder ungewöhnliche äußere Bedingungen. Diese Messpunkte werden daher nicht als Nutzsignale betrachtet und bleiben unbeachtet.

Der dritte Grenzwert ist vorzugsweise größer als vierzehn Meter. Unterhalb von vierzehn Metern ist von sinnvollen Nutzsignalen auszugehen.

Der dritte Grenzwert ist vorzugsweise kleiner als zwanzig Meter. Oberhalb von zwanzig Metern ist kein sinnvolles Nutzsignal zu erwarten. Bei der Nutzung von Entfernungsmessern an Landmaschinen ist der Bereich oberhalb von zwanzig Metern typischerweise für die Anwendung in der die Nutzsignale verarbeitet werden nicht relevant.

Vorzugsweise werden die Nutzsignale einer Vielzahl von Messbereichen zugeordnet, wobei die Zuordnung der Nutzsignale zu den Messbereichen den Horizontalwinkel und die Entfernung der Nutzsignale berücksichtigt. Durch die Aufteilung der Nutzsignale in Messbereiche können viele Anwendungen effizienter ausgeführt werden, da die Anwendungen nur die Nutzsignale aus relevanten Messbereichen berücksichtigen müssen. Dadurch wird die Menge der zu verarbeitenden Daten reduziert und die Ausführung der Anwendung effizienter.

Vorzugsweise ist jedem Messpunkt ein Vertikalwinkel zugeordnet, wobei die Zuordnung der Nutzsignale zu den Messbereichen den Vertikalwinkel berücksichtigt. Bei Messpunkten mit unterschiedlichen Vertikalwinkeln können die Messbereiche auch durch den Vertikalwinkel unterschieden werden. Durch die weitere Unterteilung der Messbereiche kann die Ausführung der Anwendung effizienter werden.

Vorzugsweise wird für jedes Nutzsignal eine Position aus Entfernung, Horizontalwinkel und Vertikalwinkel in ein kartesisches Koordinatensystem umgerechnet, wobei die Position im kartesischen Koordinatensystem auf eine Ebene projiziert wird und der erste Messbereich in der Ebene rechteckig ist. Die Position jedes Messpunktes liegt typischerweise als Kombination aus Entfernung, Horizontalwinkel und Vertikalwinkel also in Polarkoordinaten vor. Für einige Anwendungen ist es sinnvoll einen Messbereich als Rechteck in einer Ebene zu definieren. Dazu wird die Projektion der Messpunkte auf die Ebene bestimmt und auf Basis der Projektion bestimmt welchem Messbereich der jeweilige Messpunkt zugeordnet wird.

Vorzugsweise wird für ein erstes Störsignal eine durch Vertikalwinkel, Horizontalwinkel und Sensorpunkt definierte Gerade berechnet und das erste Störsignal dem ersten Messbereich zugeordnet wird, wenn die Gerade die Ebene schneidet. Durch die Zuordnung der Störsignale, deren Gerade die Ebene innerhalb des ersten Messbereichs schneidet, werden die Störsignale dem Messbereich zugeordnet, die die Messung in dem ersten Messbereich stören. Störsignale deren Gerade die Ebene nicht oder außerhalb des ersten Messbereichs schneiden stören die Messung innerhalb des Messbereichs nicht.

Alternativ werden die Störsignale einer Vielzahl von Winkelbereichen zugeordnet, wobei die Zuordnung der Störsignale zu den Winkelbereichen den Horizontalwinkel der Störsignale berücksichtigt. Vorzugsweise berücksichtigt die Zuordnung der Staubsignale zu den Winkelbereichen und/oder die Zuordnung der Schmutzsignale zu den Winkelbereichen den Vertikalwinkel. Vorzugsweise wird jedem Messbereich ein Winkelbereich zugeordnet. Analog zu der Zuordnung der Nutzsignale zu Messbereichen, werden die Störsignale Winkelbereichen zugeordnet. Durch diese Zuordnung wird die Verarbeitung der Störsignale effizienter. Die Winkelbereiche werden dabei vorzugsweise jeweils dem Messbereich zugeordnet, deren Messung die Störsignale im Winkelbereich stören. Die geometrische Form der Messbereiche und der Winkelbereiche kann dabei unterschiedlich sein. Da nicht immer eindeutig ist welche Störsignale welche Messbereiche stören, können die Winkelbereiche auch Störsignale enthalten, die die Messung im zugeordneten Messbereich nicht stören.

Vorzugsweise wird, wenn für eine Messung die Anzahl der Nutzsignale in dem ersten Messbereich unter dem ersten Schwellwert liegt, die Anzahl der Staubsignale und die Anzahl der Schmutzsignale der Messung in dem zugeordneten Winkelbereich verglichen, wobei ein Signal zur Staubabsaugung ausgegeben wird, wenn die Anzahl der Staubsignale höher ist als die Anzahl der Schmutzsignale und ein Signal zur Reinigung ausgegeben wird, wenn die Anzahl der Schmutzsignale höher ist als die Anzahl der Staubsignale. Wenn die Anzahl der Nutzsignale im ersten Messbereich unter den ersten Schwellwert sinkt, sollten Maßnahmen zur Verbesserung der Signalqualität eingeleitet werden. Der Vergleich der Staubsignale mit den Schmutzsignalen gibt an ob die Staubabsaugung oder die Schmutzentfernung die bessere Maßnahme ist und es wird ein entsprechendes Signal ausgegeben.

In einer Ausführungsform wird ein Signal zur Staubabsaugung ausgegeben, wenn die Anzahl der Staubsignale höher ist als ein zweiter Schwellwert. Durch die Ausgabe eines Signals zur Staubabsaugung, wenn die Anzahl der Staubsignale höher ist als ein zweiter Schwellwert, also auch wenn die Anzahl der Nutzsignale in dem ersten Messbereich über dem ersten Schwellwert liegt, kann eine Maßnahme zur Verbesserung der Signalqualität bereits eingeleitet werden, bevor die Signalqualität beeinträchtigt ist.

In einer Ausführungsform wird ein Signal zur Reinigung ausgegeben, wenn die Anzahl der Schmutzsignale höher ist als ein zweiter Schwellwert. Der zweite Schwellwert ist bevorzugt kleiner als ein Drittel der Anzahl der Messpunkte der Messung.

In einer weiteren Ausführungsform wird ein Signal zur Reinigung ausgegeben, wenn die Anzahl der Schmutzsignale höher ist als ein dritter Schwellwert. Der dritte Schwellwert ist bevorzugt kleiner als ein Drittel der Anzahl der Messpunkte der Messung.

In einer weiteren Ausführungsform wird ein Signal zur Staubabsaugung ausgegeben, wenn die Anzahl der Staubsignale in einem Winkelbereich höher ist als ein vierter Schwellwert. Der Winkelbereich ist bevorzugt der dem ersten Messbereich zugeordnete Winkelbereich. Durch die Einschränkung auf den Winkelbereich werden die Staubsignale erfasst, die in einem besonders relevanten Bereich liegen. Die Höhe des vierten Schwellwertes ist bevorzugt abhängig von der Größe des Winkelbereichs. Der vierte Schwellwert ist bevorzugt kleiner als ein Drittel der Anzahl der durch den Winkelbereich ausgesendeten Messsignale.

In einer weiteren Ausführungsform wird ein Signal zur Reinigung ausgegeben wird, wenn die Anzahl der Schmutzsignale in einem Winkelbereich höher ist als ein fünfter Schwellwert. Der Winkelbereich ist bevorzugt der dem ersten Messbereich zugeordnete Winkelbereich. Durch die Einschränkung auf den Winkelbereich werden die Schmutzsignale erfasst, die in einem besonders relevanten Bereich liegen. Die Höhe des fünften Schwellwertes ist bevorzugt abhängig von der Größe des Winkelbereichs. Der fünfte Schwellwert ist bevorzugt kleiner als ein Drittel der Anzahl der durch den Winkelbereich ausgesendeten Messsignale.

In einer bevorzugten Ausführungsform bleiben Schmutzsignale mit einer Entfernung kleiner als ein vierter Grenzwert bei Bestimmung der Anzahl der Schmutzsignale unbeachtet, wobei der vierte Grenzwert vorzugsweise größer als zehn Zentimeter ist. Entfernungsmesser sind häufig gekapselt und die Messsignale verlassen die Kapselung durch eine transparente Scheibe, wobei an der Scheibe einige Messsignale reflektiert werden. Diese Signale entstehen also weder durch Schmutz oder Staub noch durch Reflektion an den zu vermessenden Objekten. Diese Signale werden daher bei der Bestimmung der Anzahl der Schmutzsignale nicht beachtet.

Bevorzugt ist der erste Schwellwert kleiner als die Hälfte der Anzahl der Messpunkte der Messung.

Besonders bevorzugt ist der erste Schwellwert kleiner ist als ein Drittel der Anzahl der Messpunkte der Messung.

Im Folgenden wird die Erfindung anhand von Ausführungsbeispiele darstellenden nicht maßstabsgetreuen Zeichnungen näher erläutert. Dabei zeigt:
Fig. 1 eine selbstfahrende landwirtschaftliche Arbeitsmaschine mit einem Entfernungsmesser in Seitenansicht,
Fig. 2 eine selbstfahrende landwirtschaftliche Arbeitsmaschine mit einem Entfernungsmesser in Draufsicht,
Fig. 3 Messpunkte einer Messung,
Fig. 4 Messpunkte einer Messung,
Fig. 5 Anzahl von Messpunkte im Zeitverlauf
Fig. 6 Anzahl von Messpunkte im Zeitverlauf.

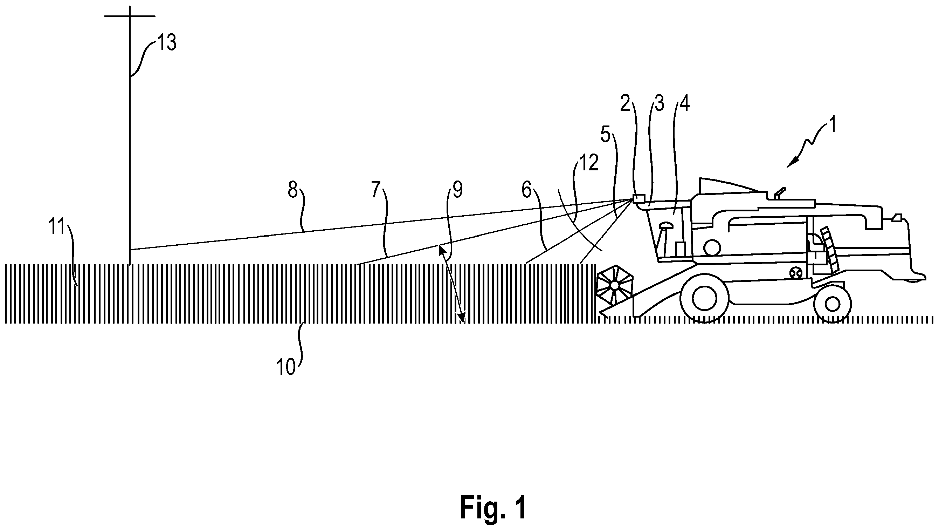

In Fig. 1 ist eine selbstfahrende landwirtschaftliche Arbeitsmaschine 1 mit einem Entfernungsmesser 2 gezeigt. Die landwirtschaftliche Arbeitsmaschine 1 ist in diesem Beispiel ein Mähdrescher und der Entfernungsmesser 2 ist an einem Dach 3 der Fahrerkabine 4 befestigt. Der Entfernungsmesser 2 ist in diesem Beispiel ein LIDAR-System. Der Entfernungsmesser 2 sendet Messsignale 5, 6, 7, 8 mit unterschiedlichem Vertikalwinkel 9 aus. Die Messsignale 5, 6, 7, 8 werden in Richtung des Feldes 10 vor der Arbeitsmaschine 1 ausgesendet. Auf dem Feld 10 wächst Erntegut 11. Messsignale 5, 6, 7, 8 deren Entfernung größer ist als ein erster Grenzwert 12 werden als Nutzsignale identifiziert. Das erste Messsignal 5, das zweite Messsignal 6 und das dritte Messsignal 7 werden vom Erntegut 11 reflektiert. Das vierte Messsignal 8 wird von einem Hindernis 13 reflektiert. Da alle Messsignale 5, 6, 7, 8 von zu vermessenden Objekten reflektiert werden, deren Entfernung größer ist als der erste Grenzwert 12, werden alle aus den Messsignalen entstehenden Messpunkte als Nutzsignale identifiziert. Die Verarbeitung der Messpunkte kann von einer am Sensor verbauten Recheneinheit (nicht dargestellt) erfolgen oder von einer anderen Recheneinheit, die mit dem Sensor kommunikativ gekoppelt ist, wobei der Sensor die Messpunkte an die Recheneinheit übermittelt. Die Arbeitsmaschine 1 ist mit einer Staubabsaugvorrichtung (nicht dargestellt) ausgestattet. Mit der Staubabsaugvorrichtung kann insbesondere die Staubmenge vor dem Entfernungsmesser 2 reduziert werden. Weiterhin ist die Arbeitsmaschine 1 mit einer Reinigungsanlage (nicht dargestellt) ausgestattet. Mit der Reinigungsanlage kann insbesondere eine Abdeckung des Entfernungsmessers 2 von Schmutz befreit werden.

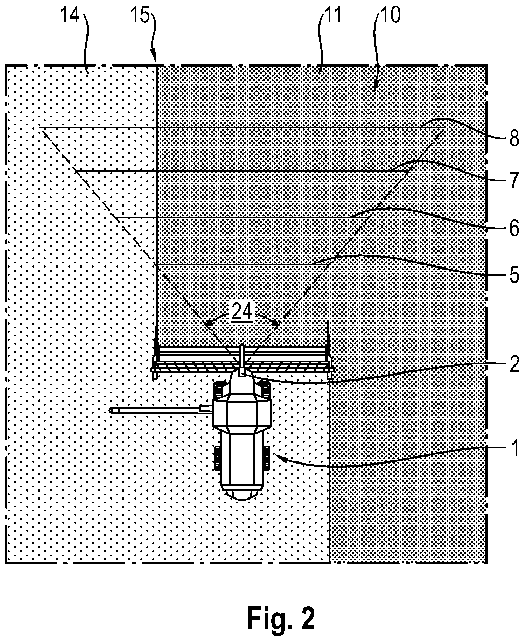

In Fig. 2 ist eine selbstfahrende landwirtschaftliche Arbeitsmaschine 1 mit einem Entfernungsmesser 2 gezeigt. Der Entfernungsmesser 2 sendet Messsignale 5, 6, 7, 8 mit unterschiedlichem Vertikalwinkel (nicht dargestellt) aus. Durch die unterschiedlichen Vertikalwinkel treffen die Messsignale 5, 6, 7, 8 in unterschiedlicher Entfernung vor der Arbeitsmaschine 1 auf das Feld 10 auf. Bei einer Messung wird jedes Messsignal mehrfach mit unterschiedlichem Horizontalwinkel 24 ausgesendet. Ein Teil der Messsignale 5, 6, 7, 8 wird vom Erntegut 11 reflektiert und ein Teil der Messsignale 5, 6, 7, 8 wird vom bereits abgeernteten Stoppelfeld 14 Reflektiert. Aus den unterschiedlichen Reflektionen kann die Bestandskannte 15 erkannt werden. Die erkannte Bestandskante 15 kann bspw. von einer Lenkungssteuerung genutzt werden, um die Arbeitsmaschine 1 entlang der Bestandskante 15 zu fahren. Dabei kann die Lenkungssteuerung auf derselben Recheneinheit laufen auf der die Messpunkte ausgewertet werden oder auf einer anderen.

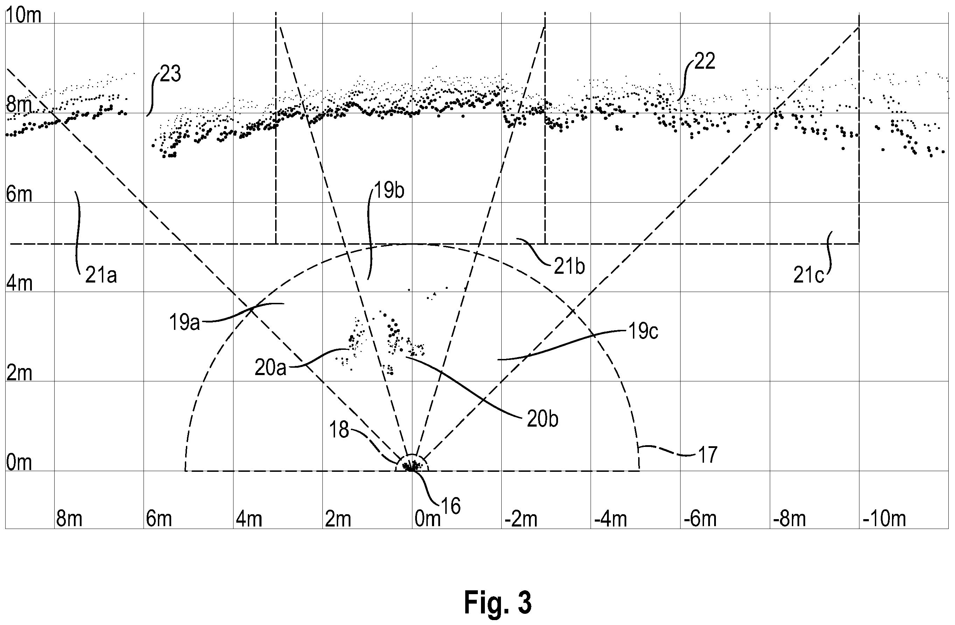

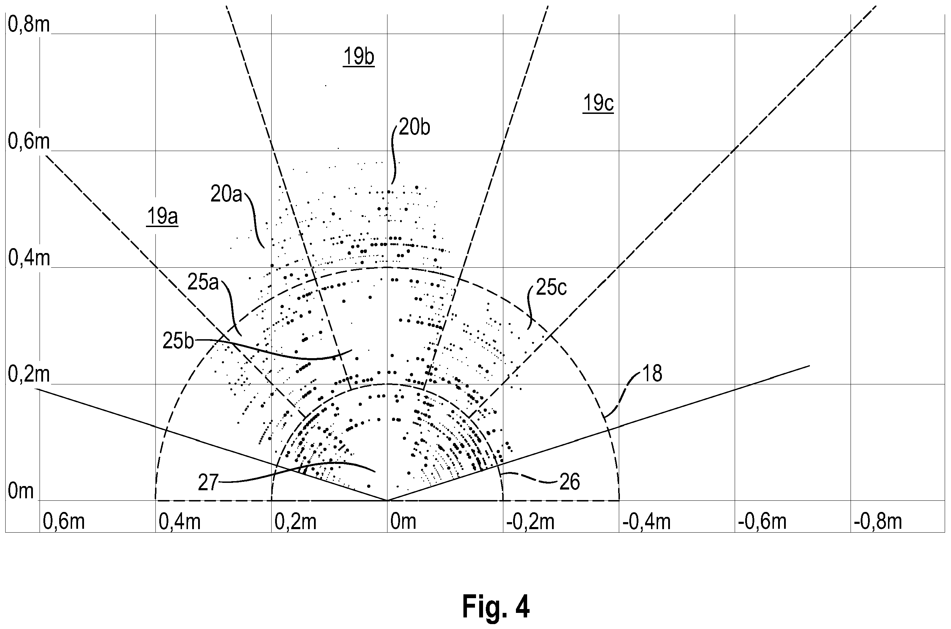

In Fig. 3 sind die Messpunkte einer Messung gezeigt. Ausgehend von einem Sensorpunkt 16 wird die Entfernung der Messpunkte und ihr Horizontalwinkel gezeigt. Messpunkte unterhalb des ersten Grenzwertes 17 werden als Störsignale identifiziert. Der erste Grenzwert 17 beträgt in diesem Beispiel fünf Meter. Die Störsignale werden anhand eines zweiten Grenzwertes 18 in Staubsignale und Schmutzsignale unterschieden. Der zweite Grenzwert 18 beträgt in diesem Beispiel vierzig Zentimeter. Die Störsignale werden in diesem Beispiel drei Winkelbereichen 19a, 19b, 19c zugeordnet. Im ersten Winkelbereich 19a sind einige Staubsignale 20a zu erkennen. Im zweiten Winkelberiech 19b sind viele Staubsignale 20b zu erkennen. Im dritten Winkelbereich 19c sind keine Staubsignale zu erkennen. Der Bereich der Schmutzsignale ist in dieser Darstellung sehr klein und wird in Fig.4 näher erläutert.

Die Messpunkte mit Entfernungen oberhalb des ersten Grenzwertes 17 werden als Nutzsignale 22 identifiziert. Die Nutzsignale werden in diesem Beispiel drei Messbereichen 21a, 21b, 21c zugeordnet. Die Messbereiche 21a, 21b, 21c sind in diesem Beispiel rechteckig in einem kartesischen Koordinatensystem. Die Nutzsignale 22 sind jeweils durch Entfernung, Horizontalwinkel 24 und Vertikalwinkel 9 gekennzeichnet. Für die Zuordnung zu einem Messbereich 21a, 21b, 21c wird jedes Nutzsignal 22 auf eine Ebene projiziert und bestimmt in welchen Messbereich 21a, 21b, 21c die Projektion fällt. In allen drei Messbereichen 21a, 21b, 21c sind in diesem Beispiel genügend Nutzsignale 22 zu erkennen. Im ersten Messbereich 21a ist eine Messlücke 23 in den Nutzsignalen 22 zu erkennen. An der Messlücke 23 ist die Bestandskante 15 zu erkennen.

In Fig. 4 sind die Messpunkte einer Messung mit geringen Entfernungen gezeigt. Im ersten Winkelbereich 19a sind einige Staubsignale 20a mit Entfernungen größer als der zweite Grenzwert 18 und viele Schmutzsignale 25a mit Entfernungen kleiner als der zweite Grenzwert 18 gezeigt. Im zweiten Winkelbereich 19b sind viele Staubsignale 20b und einige Schmutzsignale 25b gezeigt. Im dritten Winkelbereich 19c sind keine Staubsignale und viele Schmutzsignale 25c gezeigt. Unterhalb eines dritten Grenzwertes 26 sind Messpunkte mit sehr kleinen Entfernungen 27 gezeigt. Diese Messpunkte 27 entstehen durch Reflektion der Messstrahlen am Gehäuse des Entfernungsmessers. Da diese Messpunkte immer auftreten, auch wenn kein Schmutz am Gehäuse haftet, werden diese Messpunkte bei der Bestimmung der Anzahl der Schmutzsignale nicht beachtet.

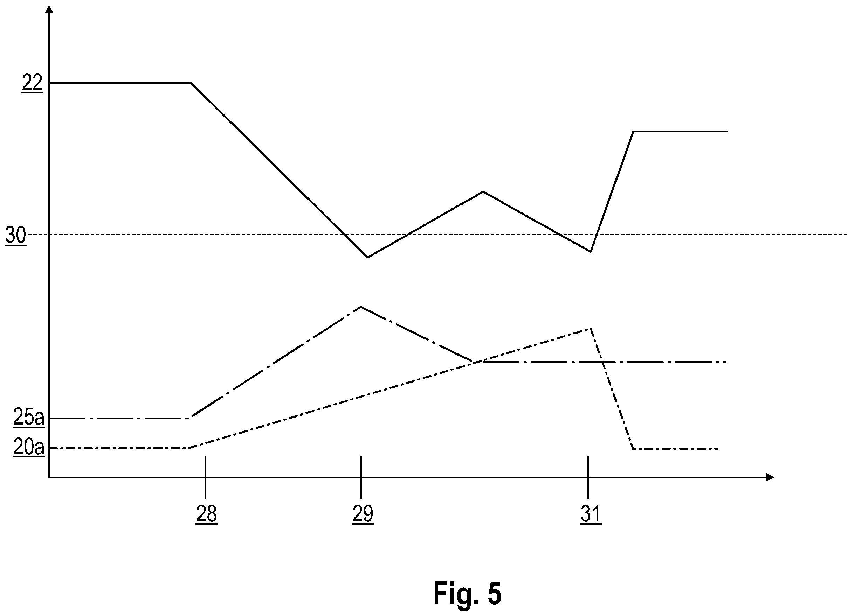

In Fig. 5 ist Anzahl von Messpunkte im ersten Messbereich 21a und im ersten Winkelbereich 20a im Zeitverlauf gezeigt. Die Messpunkte werden dabei in Nutzsignale 22, Staubsignale 20a und Schmutzsignale 25a unterschieden. Zu Beginn des Zeitverlaufs bei einem ersten Zeitpunkt 28 ist der Entfernungsmesser sauber und die Anzahl der Schmutzsignale 25a gering. Die Staubbelastung und die Anzahl der Staubsignale 20a ist ebenfalls gering. Die Anzahl der Nutzsignale 22 ist hoch. Im Zeitverlauf steigt die Staubbelastung und die Anzahl der Staubsignale 20a nimmt zu und die Anzahl der Nutzsignale 22 nimmt ab. Zu einem zweiten Zeitpunkt 29 sinkt die Anzahl der Nutzsignale 22 unter einen ersten Schwellwert 30. Daraufhin wird ein Warnsignal ausgegeben und die Anzahl der Staubsignale 20a mit der Anzahl der Schmutzsignale 25a verglichen. Da die Anzahl der Staubsignale 20a größer ist als die Anzahl der Schmutzsignale 25a wird ein Signal zur Staubabsaugung ausgegeben. Das Signal zur Staubabsaugung aktiviert eine Staubabsaugvorrichtung. Durch die Staubabsaugung sinkt die Anzahl der Staubsignale 20a und die Anzahl der Nutzsignale 22 steigt. Ein Teil des Staubes setzt sich im Zeitverlauf als Schmutz vor dem Entfernungsmesser ab die Anzahl der Schmutzsignale 25a steigt und die Anzahl der Nutzsignale 22 sinkt. Zu einem dritten Zeitpunkt 31 sinkt die Anzahl der Nutzsignale 22 unter den ersten Schwellwert 30. Daraufhin wird ein Warnsignal ausgegeben und die Anzahl der Staubsignale 20a mit der Anzahl der Schmutzsignale 25a verglichen. Da die Anzahl der Schmutzsignale 25a größer ist als die Anzahl der Staubsignale 20a wird ein Signal zur Reinigung ausgegeben. Das Signal zur Reinigung aktiviert eine Reinigungsanlage. Durch die Reinigung sinkt die Anzahl der Schmutzsignale 20a und die Anzahl der Nutzsignale 22 steigt.

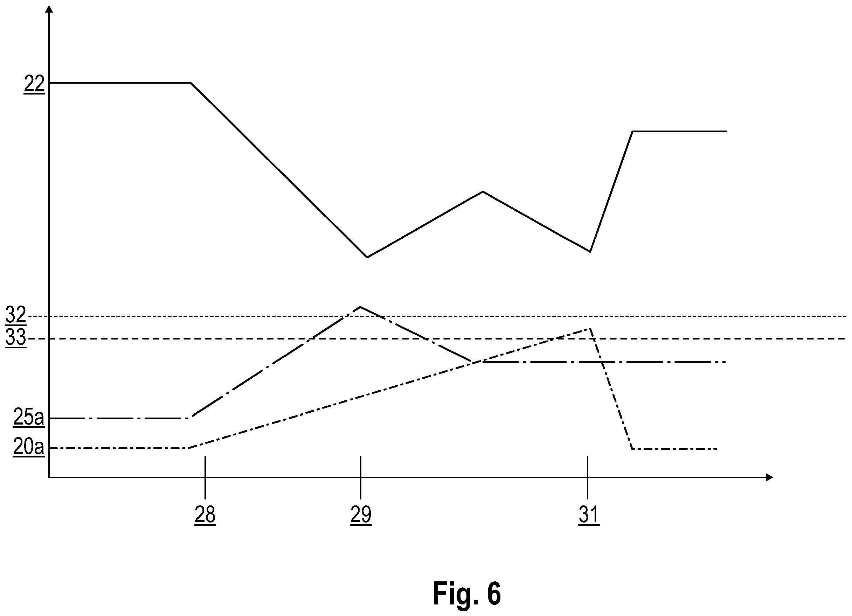

In Fig. 6 ist Anzahl von Messpunkte im ersten Messbereich 21a und im ersten Winkelbereich 20a im Zeitverlauf gezeigt. Die Messpunkte werden dabei in Nutzsignale 22, Staubsignale 20a und Schmutzsignale 25a unterschieden. Zu Beginn des Zeitverlaufs bei einem ersten Zeitpunkt 28 ist der Entfernungsmesser sauber und die Anzahl der Schmutzsignale 25a gering. Die Staubbelastung und die Anzahl der Staubsignale 20a ist ebenfalls gering. Die Anzahl der Nutzsignale 22 ist hoch. Im Zeitverlauf steigt die Staubbelastung und die Anzahl der Staubsignale 20a nimmt zu und die Anzahl der Nutzsignale 22 nimmt ab. Zu einem zweiten Zeitpunkt 29 steigt die Anzahl der Staubsignale 20a über einen zweiten Schwellwert 32. Daraufhin wird ein Signal zur Staubabsaugung ausgegeben. Das Signal zur Staubabsaugung aktiviert eine Staubabsaugvorrichtung. Durch die Staubabsaugung sinkt die Anzahl der Staubsignale 20a und die Anzahl der Nutzsignale 22 steigt. Ein Teil des Staubes setzt sich im Zeitverlauf als Schmutz vor dem Entfernungsmesser ab die Anzahl der Schmutzsignale 25a steigt und die Anzahl der Nutzsignale 22 sinkt. Zu einem dritten Zeitpunkt 31 steigt die Anzahl der Schmutzsignale 25a über einen dritten Schwellwert 33. Daraufhin wird ein Signal zur Reinigung ausgegeben. Das Signal zur Reinigung aktiviert eine Reinigungsanlage. Durch die Reinigung sinkt die Anzahl der Schmutzsignale 20a und die Anzahl der Nutzsignale 22 steigt.

Die Anzahl der Staubsignale und der Schmutzsignale kann auch über alle Winkelbereiche, statt nur für den ersten Messbereich bestimmt werden. In dem Fall wird das Signal zur Staubabsaugung ausgegeben, wenn die Anzahl aller Staubsignale 20a, 20b über einen vierten Schwellwert 32 steigt. Analog wird das Signal zur Reinigung ausgegeben, wenn die Anzahl aller Schmutzsignale 25a, 25b, 25c über einen fünften Grenzwert steigt. Der zeitliche Ablauf ist analog zu dem in Figur 6 gezeigten Ablauf, mit dem Unterscheid, dass statt der Störsignale des ersten Winkelbereichs alle Störsignale berücksichtigt werden und die Schwellwerte angepasst werden.

### Bezugszeichenliste

| | | | |
|---|---|---|---|
| 1 | Arbeitsmaschine | 25a | Schmutzsignale |
| 2 | Entfernungsmesser | 25b | Schmutzsignale |
| 3 | Dach | 25c | Schmutzsignale |
| 4 | Fahrerkabine | 26 | Vierter Grenzwert |
| 5 | Erstes Messsignal | 27 | Messpunkte mit sehr kleiner Entfernung |
| 6 | Zweites Messsignal | 28 | Erster Zeitpunkt |
| 7 | Drittes Messsignal | 29 | Zweiter Zeitpunkt |
| 8 | Viertes Messsignal | 30 | Erster Schwellwert |
| 9 | Vertikalwinkel | 31 | Dritter Zeitpunkt |
| 10 | Feld | 32 | Zweiter Schwellwert |
| 11 | Erntegut | 33 | Dritter Schwellwert |
| 12 | Erster Grenzwert | | |
| 13 | Hindernis | | |
| 14 | Stoppelfeld | | |
| 15 | Bestandskante | | |
| 16 | Sensorpunkt | | |
| 17 | Erster Grenzwert | | |
| 18 | Zweiter Grenzwert | | |
| 19a | Erster Winkelbereich | | |
| 19b | Zweiter Winkelbereich | | |
| 19c | Dritter Winkelbereich | | |
| 20a | Staubsignale | | |
| 20b | Staubsignale | | |
| 21a | Erster Messbereich | | |
| 21b | Zweiter Messbereich | | |
| 21c | Dritter Messbereich | | |
| 22 | Nutzsignale | | |
| 23 | Messlücke | | |
| 24 | Horizontalwinkel | | |

## Patentansprüche

1. Verfahren zur Signalauswertung von Signalen eines Entfernungsmessers (2), insbesondere eines Laser-Entfernungsmessers,
wobei der Entfernungsmesser (2) zyklisch Messungen durchführt,
wobei der Entfernungsmesser (2) für jede Messung eine Vielzahl an Messpunkten (20a, 20b, 22, 25a, 25b, 25c) ausgibt, wobei jeder Messpunkt eine Entfernung angibt,
wobei der Entfernungsmesser (2) Entfernungen in einer Vielzahl von Richtungen misst und jedem Messpunkt (20a, 20b, 22, 25a, 25b, 25c) ein Horizontalwinkel (24) zugeordnet ist,
wobei eine Mehrzahl der Messpunkte (20a, 20b, 22, 25a, 25b, 25c) auf Basis der Entfernung in Nutzsignale (22) und Störsignale unterschieden werden,
wobei Messpunkte (20a, 20b, 22, 25a, 25b, 25c) mit einer Entfernung unterhalb eines ersten Grenzwertes (12) als Störsignale (20a, 20b, 25a, 25b, 25c) und Messpunkte oberhalb des ersten Grenzwertes (12) als Nutzsignale (22) identifiziert werden,
wobei die Anzahl der Störsignale bestimmt wird und ein Warnsignal ausgegeben wird, wenn die Anzahl der Störsignale eine vorbestimmte Bedingung erfüllt,
wobei Störsignale in Staubsignale (20a, 20b) und Schmutzsignale (25a, 25b, 25c) unterschieden werden, wobei Störsignale (20a, 20b, 25a, 25b, 25c) mit einer Entfernung unterhalb eines zweiten Grenzwertes (18) als Schmutzsignale (25a, 25b, 25c) und Störsignale (20a, 20b, 25a, 25b, 25c) oberhalb des zweiten Grenzwertes (18) als Staubsignale (20a, 20b) identifiziert werden.

2. Verfahren nach einem der vorhergehenden Ansprüche, **dadurch gekennzeichnet, dass** der erste Grenzwert (12) kleiner als sechs Meter ist.

3. Verfahren nach einem der vorhergehenden Ansprüche, **dadurch gekennzeichnet, dass** der erste Grenzwert (12) größer als drei Meter ist.

4. Verfahren nach Anspruch 1, **dadurch gekennzeichnet, dass** der zweite Grenzwert (18) kleiner als einen Meter ist.

5. Verfahren nach Anspruch 1 oder Anspruch 4, **dadurch gekennzeichnet, dass** der zweite Grenzwert (18) größer als dreißig Zentimeter ist.

6. Verfahren nach einem der vorhergehenden Ansprüche, **dadurch gekennzeichnet, dass** das Warnsignal ein Signal zur Staubabsaugung ist und die vorbestimmte Bedingung ist, dass die Anzahl der Staubsignale (20a, 20b) höher ist als ein zweiter Schwellwert (32).

7. Verfahren nach einem der vorhergehenden Ansprüche, **dadurch gekennzeichnet, dass** das Warnsignal ein Signal zur Reinigung ist und die vorbestimmte Bedingung ist, dass die Anzahl der Schmutzsignale (25a, 25b, 25c) höher ist als ein dritter Schwellwert (33).

8. Verfahren nach einem der Ansprüche 1 bis 5, **dadurch gekennzeichnet, dass** die Störsignale (20a, 20b, 25a, 25b, 25c) einer Vielzahl von Winkelbereichen (19a, 19b, 19c) zugeordnet werden, wobei die Zuordnung der Störsignale (20a, 20b, 25a, 25b, 25c) zu den Winkelbereichen (19a, 19b, 19c) den Horizontalwinkel (24) der Störsignale berücksichtigt.

9. Verfahren nach Anspruch 8, **dadurch gekennzeichnet, dass** die Nutzsignale (22) einer Vielzahl von Messbereichen (21a, 21b, 21c) zugeordnet werden, wobei die Zuordnung der Nutzsignale (22) zu den Messbereichen (21a, 21b, 21c) den Horizontalwinkel (24) der Nutzsignale (22) berücksichtigt.

10. Verfahren nach Anspruch 9 **dadurch gekennzeichnet, dass** einem ersten Messbereich (21a) ein erster Winkelbereich (19a) zugeordnet wird.

11. Verfahren nach Anspruch 10, **dadurch gekennzeichnet, dass** das Warnsignal ein Signal zur Staubabsaugung ist und die vorbestimmte Bedingung ist, dass für eine Messung die Anzahl der Nutzsignale (22) in dem ersten Messbereich (21a) unter einem ersten Schwellwert (30) liegt und die Anzahl der Staubsignale (20a) in dem ersten Winkelbereich (19a) höher ist als die Anzahl der Schmutzsignale (25a) in dem ersten Winkelbereich (19a).

12. Verfahren nach Anspruch 10, **dadurch gekennzeichnet, dass** das Warnsignal ein Signal zur Reinigung ist und die vorbestimmte Bedingung ist, dass für eine Messung die Anzahl der Nutzsignale (22) in dem ersten Messbereich (21a) unter einem ersten Schwellwert (30) liegt und die Anzahl der Schmutzsignale (25a) in dem ersten Winkelbereich (19a) höher ist als die Anzahl der Staubsignale(20a) in dem ersten Winkelbereich (19a).

13. Verfahren nach Anspruch 6 oder 11, **dadurch gekennzeichnet, dass** das Signal zur Staubabsaugung die Ausgabe einer Empfehlung an den Nutzer bewirkt.

14. Verfahren nach Anspruch 6 oder 11, **dadurch gekennzeichnet, dass** das Signal zur Staubabsaugung die Aktivierung einer Staubabsaugvorrichtung bewirkt.

15. Verfahren nach Anspruch 7 oder 12, **dadurch gekennzeichnet, dass** das Signal zur Reinigung die Ausgabe einer Empfehlung an den Nutzer bewirkt.

16. Verfahren nach Anspruch 7 oder 12, **dadurch gekennzeichnet, dass** das Signal zur Reinigung die Aktivierung einer Reinigungsanlage bewirkt.

17. Selbstfahrende landwirtschaftliche Arbeitsmaschine (1) mit einem Entfernungsmesser (2), insbesondere eines Laser-Entfernungsmessers,
wobei der Entfernungsmesser (2) im Wesentlichen in Fahrtrichtung der Arbeitsmaschine ausgerichtet ist,
wobei die selbstfahrende landwirtschaftliche Arbeitsmaschine (1) mit einer Staubabsaugvorrichtung ausgestattet ist,
wobei die selbstfahrende landwirtschaftliche Arbeitsmaschine (1) mit einer Reinigungsanlage zur Reinigung des Entfernungsmessers (2) ausgestattet ist,
wobei die selbstfahrende landwirtschaftliche Arbeitsmaschine (1) mit einer Recheneinheit ausgestattet ist,
wobei die Recheneinheit dazu vorgesehen und eingerichtet ist ein Verfahren nach einem der vorhergehenden Ansprüche durchzuführen.

## Claims

1. A method for the evaluation of signals from a range finder (2), in particular a laser range finder,
wherein the range finder (2) carries out measurements cyclically,
wherein for each measurement, the range finder (2) outputs a plurality of measuring points (20a, 20b, 22, 25a, 25b, 25c),
wherein each measuring point indicates a distance,
wherein the range finder (2) measures distances in a plurality of directions and a horizontal angle (24) is associated with each measuring point (20a, 20b, 22, 25a, 25b, 25c),
wherein a plurality of the measuring points (20a, 20b, 22, 25a, 25b, 25c) are differentiated into meaningful signals (22) and interfering signals on the basis of the distance,
wherein measuring points (20a, 20b, 22, 25a, 25b, 25c) with a distance below a first limiting value (12) are identified as interfering signals (20a, 20b, 25a, 25b, 25c) and measuring points above the first limiting value (12) are identified as meaningful signals (22),
wherein the number of interfering signals is determined and a warning signal is emitted when the number of interfering signals satisfies a predetermined condition,
wherein interfering signals are differentiated into dust signals (20a, 20b) and debris signals (25a, 25b, 25c), wherein interfering signals (20a, 20b, 25a, 25b, 25c) with a distance below a second limiting value (18) are identified as debris signals (25a, 25b, 25c) and interfering signals (20a, 20b, 25a, 25b, 25c) above the second limiting value (18) are identified as dust signals (20a, 20b).

2. The method according to one of the preceding claims,
**characterized in that** the first limiting value (12) is less than six metres.

3. The method according to one of the preceding claims,
**characterized in that** the first limiting value (12) is more than three metres.

4. The method according to claim 1, **characterized in that** the second limiting value (18) is less than one metre.

5. The method according to claim 1 or claim 4, **characterized in that** the second limiting value (18) is more than thirty centimetres.

6. The method according to one of the preceding claims,
**characterized in that** the warning signal is a signal for dust extraction and the predetermined condition is that the number of dust signals (20a, 20b) is higher than a second threshold value (32).

7. The method according to one of the preceding claims,
**characterized in that** the warning signal is a signal for cleaning and the predetermined condition is that the number of debris signals (25a, 25b, 25c) is higher than a third threshold value (33).

8. The method according to one of claims 1 to 5, **characterized in that** the interfering signals (20a, 20b, 25a, 25b, 25c) are associated with a plurality of angular areas (19a, 19b, 19c), wherein the association of the interfering signals (20a, 20b, 25a, 25b, 25c) with the angular areas (19a, 19b, 19c) takes into consideration the horizontal angle (24) of the interfering signals.

9. The method according to claim 8, **characterized in that** the meaningful signals (22) are associated with a plurality of measurement areas (21a, 21b, 21c), wherein the association of the meaningful signals (22) with the measurement areas (21a, 21b, 21c) takes into consideration the horizontal angle (24) of the meaningful signals (22).

10. The method according to claim 9, **characterized in that** a first angular area (19a) is associated with a first measurement area (21a).

11. The method according to claim 10, **characterized in that** the warning signal is a signal for dust extraction and the predetermined condition is that for a measurement, the number of meaningful signals (22) in the first measurement area (21a) lies below a first threshold value (30) and the number of dust signals (20a) in the first angular area (19a) is higher than the number of debris signals (25a) in the first angular area (19a).

12. The method according to claim 10, **characterized in that** the warning signal is a signal for cleaning and the predetermined condition is that for a measurement, the number of meaningful signals (22) in the first measurement area (21a) lies below a first threshold value (30) and the number of debris signals (25a) in the first angular area (19a) is higher than the number of dust signals (20a) in the first angular area (19a).

13. The method according to claim 6 or claim 11, **characterized in that** the signal for dust extraction causes a recommendation to be output to the user.

14. The method according to claim 6 or claim 11, **characterized in that** the signal for dust extraction causes a dust extraction device to be activated.

15. The method according to claim 7 or claim 12, **characterized in that** the signal for cleaning causes a recommendation to be output to the user.

16. The method according to claim 7 or claim 12, **characterized in that** the signal for cleaning causes a cleaning unit to be activated.

17. A self-propelled agricultural working machine (1) with a range finder (2), in particular a laser range finder,
wherein the range finder (2) is orientated substantially in the direction of travel of the working machine,
wherein the self-propelled agricultural working machine (1) is equipped with a dust extraction device,
wherein the self-propelled agricultural working machine (1) is equipped with a cleaning unit for cleaning the range finder (2),
wherein the self-propelled agricultural working machine (1) is equipped with a processing unit,
wherein the processing unit is provided and configured to carry out a method according to one of the preceding claims.

## Revendications

1. Procédé d'évaluation des signaux d'un télémètre (2), en particulier d'un télémètre laser,
selon lequel le télémètre (2) réalise des mesures de manière cyclique,
selon lequel le télémètre (2) fournit pour chaque mesure une pluralité de points de mesure (20a, 20b, 22, 25a, 25b, 25c), chaque point de mesure indiquant une distance,
selon lequel le télémètre (2) mesure des distances dans une pluralité de directions, et un angle horizontal (24) est associé à chaque point de mesure (20a, 20b, 22, 25a, 25b, 25c),
selon lequel une majorité des points de mesure (20a, 20b, 22, 25a, 25b, 25c) sont distingués en signaux utiles (22) et signaux parasites, sur la base de la distance,
selon lequel les points de mesure (20a, 20b, 22, 25a, 25b, 25c) avec une distance inférieure à une première valeur limite (12) sont identifiés en tant que signaux parasites (20a, 20b, 25a, 25b, 25c) et les points de mesure situés au-dessus de la première valeur limite (12) sont identifiés en tant que signaux utiles (22),
selon lequel le nombre des signaux utiles est déterminé et un signal d'avertissement est émis lorsque le nombre des signaux utiles remplit une condition prédéfinie,
selon lequel des signaux parasites sont distingués en signaux de poussière (20a, 20b) et signaux de saleté (25a, 25b, 25c), les signaux parasites (20a, 20b, 25a, 25b, 25c) avec une distance inférieure à une deuxième valeur limite (18) étant identifiés en tant que signaux de saleté (25a, 25b, 25c) et les signaux parasites (20a, 20b, 25a, 25b, 25c) supérieurs à la deuxième valeur limite (18) étant identifiés en tant que signaux de poussière (20a, 20b).

2. Procédé selon l'une des revendications précédentes, **caractérisé en ce que** la première valeur limite (12) est inférieure à six mètres.

3. Procédé selon l'une des revendications précédentes, **caractérisé en ce que** la première valeur limite (12) est supérieure à trois mètres.

4. Procédé selon la revendication 1, **caractérisé en ce que** la deuxième valeur limite (18) est inférieure à un mètre.

5. Procédé selon la revendication 1 ou la revendication 4, **caractérisé en ce que** la deuxième valeur limite (18) est supérieure à trente centimètres.

6. Procédé selon l'une des revendications précédentes, **caractérisé en ce que** le signal d'avertissement est un signal en vue de l'aspiration de la poussière, et la condition prédéfinie consiste à ce que le nombre de signaux de poussière (20a, 20b) est supérieur à une deuxième valeur seuil (32).

7. Procédé selon l'une des revendications précédentes, **caractérisé en ce que** le signal d'avertissement est un signal en vue du nettoyage, et la condition prédéfinie consiste à ce que le nombre de signaux de saleté (25a, 25b, 25c) est supérieur à une troisième valeur seuil (33).

8. Procédé selon l'une des revendications 1 à 5, **caractérisé en ce que** les signaux parasites (20a, 20b, 25a, 25b, 25c) sont associés à une pluralité de plages angulaires (19a, 19b, 19c), l'association des signaux parasites (20a, 20b, 25a, 25b, 25c) aux plages angulaires (19a, 19b, 19c) prenant en compte l'angle horizontal (24) des signaux parasites.

9. Procédé selon la revendication 8, **caractérisé en ce que** les signaux utiles (22) sont associés à une pluralité de zones de mesure (21a, 21b, 21c), l'association des signaux utiles (22) aux zones de mesure (21a, 21b, 21c) prenant en compte l'angle horizontal (24) des signaux utiles (22).

10. Procédé selon la revendication 9, **caractérisé en ce qu'**une première plage angulaire (19a) est associée à une première zone de mesure (21c).

11. Procédé selon la revendication 10, **caractérisé en ce que** le signal d'avertissement est un signal en vue de l'aspiration de la poussière, et la condition prédéfinie consiste à ce que, pour une mesure, le nombre de signaux utiles (22) dans la première zone de mesure (21a) est inférieur à une première valeur seuil (30), et le nombre de signaux de poussière (20a) dans la première plage angulaire (19a) est supérieur au nombre des signaux de saleté (25a) dans la première plage angulaire (19a).

12. Procédé selon la revendication 10, **caractérisé en ce que** le signal d'avertissement est un signal en vue du nettoyage, et la condition prédéfinie consiste à ce que, pour une mesure, le nombre de signaux utiles (22) dans la première zone de mesure (21a) est inférieur à une première valeur seuil (30), et le nombre de signaux de saleté (25a) dans la première plage angulaire (19a) est supérieur au nombre des signaux de poussière (20a) dans la première plage angulaire (19a).

13. Procédé selon la revendication 6 ou 11, **caractérisé en ce que** le signal d'aspiration de poussière déclenche la délivrance d'une recommandation à destination de l'utilisateur.

14. Procédé selon la revendication 6 ou 11, **caractérisé en ce que** le signal d'aspiration de poussière déclenche l'activation d'un dispositif d'aspiration de poussière.

15. Procédé selon la revendication 7 ou 12, **caractérisé en ce que** le signal de nettoyage déclenche la délivrance d'une recommandation à destination de l'utilisateur.

16. Procédé selon la revendication 7 ou 12, **caractérisé en ce que** le signal de nettoyage déclenche l'activation d'une installation de nettoyage.

17. Machine agricole automotrice (1) comprenant un télémètre (2), en particulier un télémètre laser,
le télémètre (2) étant orienté sensiblement dans la direction de déplacement de la machine,
la machine agricole automotrice (1) étant équipée d'un dispositif d'aspiration de poussière,
la machine agricole automotrice (1) étant équipée d'un dispositif de nettoyage destiné à nettoyer le télémètre (2),
la machine agricole automotrice (1) étant équipée d'une unité de calcul,
l'unité de calcul étant prévue et conçue pour mettre en oeuvre un procédé selon l'une des revendications précédentes.
